# EUROPÄISCHE PATENTSCHRIFT

(11) **EP 0 650 506 B1**
(45) Veröffentlichungstag und Bekanntmachung des Hinweises auf die Patenterteilung: **22.05.1996**
(21) Anmeldenummer: 93915921.6
(22) Anmeldetag: 15.07.1993
(51) Int. Cl.: C08J 11/00

(54) **VERFAHREN ZUM THERMISCHEN RECYCLING VON ALT-PVC UNTER WÄRMERÜCKGEWINNUNG UND RÜCKGEWINNUNG VON WASSERFREIEM CHLORWASSERSTOFF**
PROCESS FOR THE THERMAL RECYCLING OF WASTE PVC WITH THE RECOVERY OF HEAT AND ANHYDROUS HYDROGEN CHLORIDE
PROCEDE DE RECYCLAGE THERMIQUE DU PVC USAGE AVEC RECUPERATION DE LA CHALEUR ET RECUPERATION DU CHLORURE D'HYDROGENE ANHYDRE

(30) Priorität: 17.07.1992 DE 4223663
(43) Veröffentlichungstag der Anmeldung: 03.05.1995
(73) Patentinhaber: Wacker-Chemie GmbH, D-81737 München (DE)
(72) Erfinder: SCHMIDHAMMER, Ludwig, D-8261 Haiming (DE); STRASSER, Rudolf, D-8263 Burghausen (DE); DAFINGER, Willibald, D-8261 Emmerting (DE); HORNIG, Peter, D-8025 Unterhaching (DE); KREMER, Peter, D-8263 Burghausen (DE); REHM, Torsten, D-8263 Burghausen (DE)
(86) Internationale Anmeldenummer: EP9301862
(87) Internationale Veröffentlichungsnummer: WO9402538

(56) Entgegenhaltungen:
- GB-A- 2 144 047
- Dialog Information Services, file 351, World Patent Index, Dialog accession no. 001819991, ((AGEN) AGENCY OF IND SCI TECH), "Decomposing PVC-contg. waste materials - by contacting with an inert gas contg. ammonia", JP 52053979, A, 770430, 7723
- Dialog Information Services, file 351, World Patent Index, Dialog accession no. 003178340, ((CHUI) CHUGAI KOGYO KAISHA), "Heat reating vinyl chloride resin waste in the presence of fuel combustion products, and recovering the conc. hydrogen chloride etc. in a condenser", JP 56037120, A, 810410, 8122
- Dialog Information Services, file 351, World Patent Index, Dialog accession no. 002065764, ((FUJC) FUJI KAGAKU KIKAI K), "Pyrolysis of PVC resin - in fluidised bed reactor, removing hydrogen chloride formed by using basic calcium salt", JP 53109583, A, 780925, 7844

## Beschreibung

Die Erfindung betrifft ein Verfahren zum thermischen Recycling von Alt-PVC unter Wärmerückgewinnung und Rückgewinnung von wasserfreiem Chlorwasserstoff durch Verbrennen des Alt-PVC's, in Sauerstoff-haltiger Atmosphäre, unter Chlorzugabe in Form von gasförmigem Chlor und/oder Chlorkohlenwasserstoffen sowie eine Vorrichtung zur Durchführung des Verfahrens.

In Anlehnung an bereits bestehende Rücknahme- und Recyclingsysteme bei Glas, Papier und Metallen wird auch bei Kunststoffen und speziell bei Alt-PVC eine stoffliche Verwertung angestrebt, um das Müllaufkommen zu verringern. In der letzten Zeit sind auch Verfahren zur Zerlegung von Kunststoffabfällen in deren molekulare Bestandteile und deren neuerlichem Einsatz in den Produktionsanlagen der chemischen Industrie untersucht worden, wobei die Pyrolyse, aber auch das Schwelbrandverfahren und die Hydrierung die Anforderungen an eine sinnvolle thermische Verwertung nicht erfüllen, wenngleich auch bei der Hochtemperaturvergasung unter Erzeugung von wertvollem Synthesegas insgesamt betrachtet Erfolgsaussichten zu erkennen sind.

PVC-haltige Abfälle verteuern bei den bisher bekannten Verfahren die thermische Verwertung durch die erforderliche Chlorentfernung bzw. stören durch die Anwesenheit von Chlor bzw. Chloridionen bei der Hochtemperaturvergasung den Reaktionsmechanismus der Synthesegasherstellung erheblich. Die WO-A 88/08020 lehrt bei der Pyrolyse von Kunststoffabfällen mit PVC-Anteilen unter Inertgasatmosphäre den Chlorwasserstoff durch Quenchen mit Wasser zu entfernen. In der JP-A 56/089821 und der DE-A 2941393 werden Verfahren zur Pyrolyse von Alt-PVC beschrieben bei denen der Chlorwasserstoff mit wäßrigen Basen entfernt wird. In dem Verfahren nach der JP-A 53/060974 wird der Chlorwasserstoff als 35 %-ige wäßrige Lösung zurückgewonnen.

Es bestand daher die Aufgabe, ein Verfahren zu entwickeln, welches speziell auf die Verwertung von Alt-PVC zugeschnitten ist und bei dem ein Großteil der Verbrennungswärme und gasförmiger Chlorwasserstoff aus dem Abfall-PVC zurückgewonnen werden kann. Für den Betreiber einer Anlage zur Herstellung von Vinylchlorid durch thermische Spaltung von 1,2-Dichlorethan hat nämlich Chlorwasserstoff nahezu den gleichen Wert wie elementares Chlor.

Gegenstand der Erfindung ist ein Verfahren zum thermischen Recycling von Alt-PVC unter Wärmerückgewinnung und Rückgewinnung von wasserfreiem Chlorwasserstoff, dadurch gekennzeichnet, daß man
a) das Alt-PVC in Gegenwart von Sauerstoff verbrennt, wobei man dem Brenngut soviel gasförmiges Chlor und/oder Chlorkohlenwasserstoffe beimischt, daß zusammen mit dem Wasserstoff- bzw. Chlorgehalt des Brenngutes in der Mischung ein Gesamtatomverhältnis von Wasserstoff zu Chlor von mindestens 1 : 1 vorliegt,
b) das Verbrennungsgas unter Rückgewinnung eines Großteils der freiwerdenden Verbrennungswärme auf 500 bis 1000°C abkühlt und gegebenenfalls nach Filterung,
c) durch Einspritzen von wäßriger Salzsäure, deren Chlorwasserstoffkonzentration der Sättigungskonzentration bei den anstehenden Drücken und Temperaturen entspricht, auf 50 bis 120°C abkühlt, wobei der größte Teil des entstandenen Verbrennungswassers auskondensiert und wobei durch Hydrolyse flüchtiger anorganischer Verbindungen gegebenenfalls auftretende Feststoffausfällungen aus der wässrigen Salzsäure abfiltriert werden,
d) durch direkten Wärmetausch das Verbrennungsgas auf Temperaturen von -5 bis +10°C weiter abkühlt, wobei restliches Wasser als Salzsäure auskondensiert und
e) das weitgehend wasserfreie, chlorwasserstoffhaltige Verbrennungsgas der weiteren Verwendung zuführt.

Das erfindungsgemäße Verfahren ist auf geschreddertes Alt-PVC bzw. Abfall-PVC der verschiedensten Provenienzen mit den unterschiedlichsten, in der PVC-Verarbeitung verwendbaren, Füllstoffen und Pigmenten sowie auch auf weichgemachtes PVC, PVC-Copolymere und PVC-haltige Kunststoffmischungen, die beispielsweise als sogenannte Schwerfraktion aus Hausmüll durch Hydrozyklonabscheidung nach dem AKW-Verfahren (AKW = Amberger Kaolin Werke) gewonnen werden, universell anwendbar. Vor der Verbrennung kann das Alt-PVC zerkleinert werden. Vorzugsweise wird es auf eine Korngröße von etwa 1 bis 5 mm zermahlen, um Verlegungen der Brennerlanze zu verhindern.

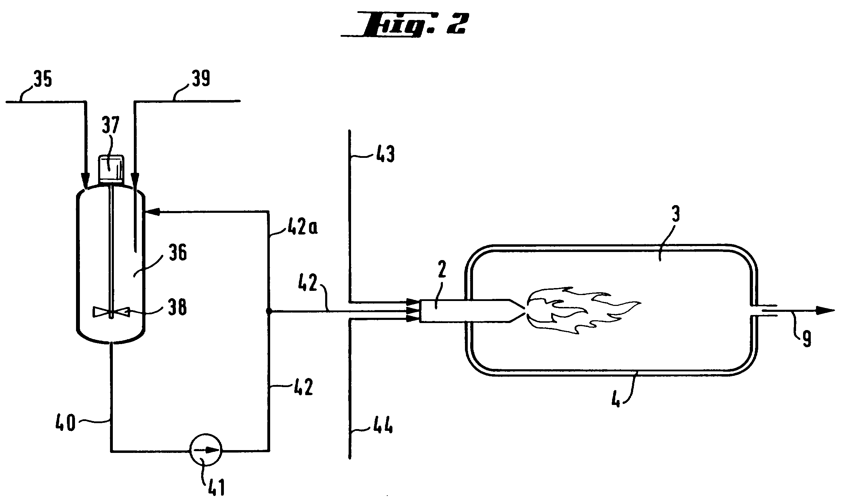

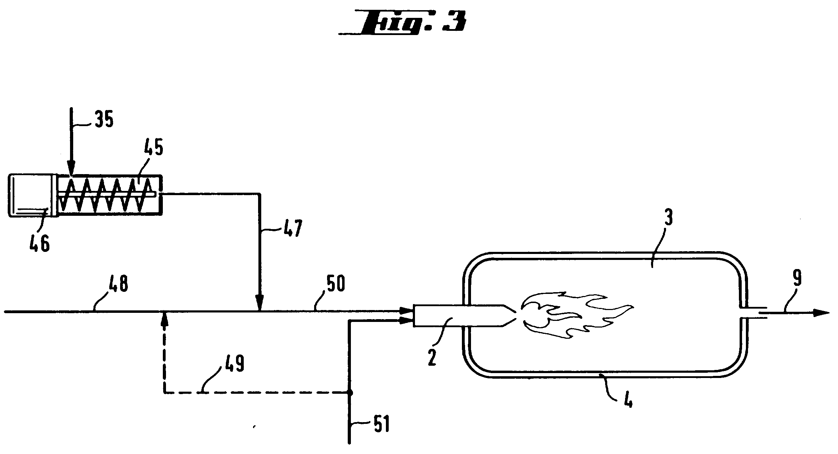

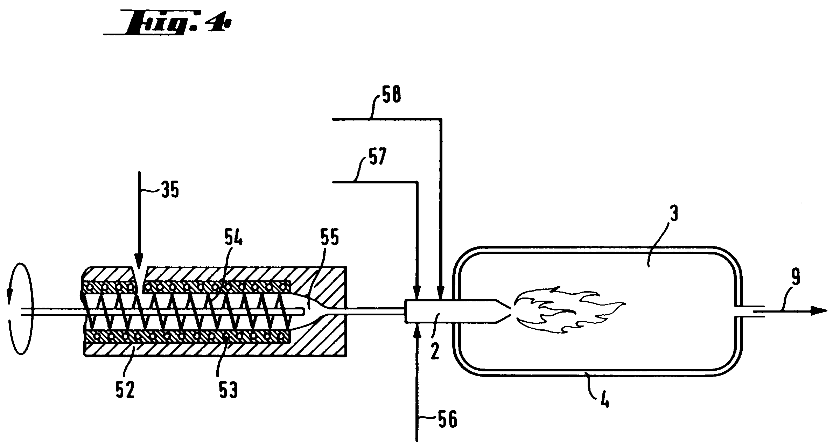

Zur Verbrennung kann das Alt-PVC mittels gängiger Methoden in die Brennkammer gefördert werden. Beispielsweise durch pneumatische Förderung und Verdüsung mit Sauerstoff und gegebenenfalls Chlorgas als Treibgas (Figur 3), durch hydraulische Förderung mit Wasser als Transportmedium, durch Eindüsung als Suspension in Chlorkohlenwasserstoffen (Figur 2) oder durch Extrudieren bei erhöhter Temperatur mit Förderung über eine Transportschnecke (Figur 4).

Die Verbrennung erfolgt in einer gekühlten Metallbrennkammer. Vorzugsweise wird das Alt-PVC mit einer Sauerstoffquelle, die mehr als 90 Vol% molekularen Sauerstoff enthält, besonders bevorzugt bei Überdrücken von 3 bis 15 bar, zur Reaktion gebracht. Insbesonders wird, bezogen auf die stöchiometrische Verbrennung der Mischung aus Alt-PVC und Chlor bzw. Chlorkohlenwasserstoffe, ein so großer Sauerstoffüberschuß eingestellt, daß das die Brennkammer verlassende Verbrennungsgas einen Chlorgehalt von 0,2 bis 2,0 Vol%, am meisten bevorzugt 0,5 bis 1,5 Vol%, enthält.

Die Verbrennung erfolgt vorzugsweise bei einer Flammentemperatur von 2000 bis 2500°C. Die Verweilzeit des Gemisches in der Brennkammer beträgt vorzugsweise 30 bis 60 Sekunden.

Die Zumischung von gasförmigem Chlor und/oder hochchlorierten Chlorkohlenwasserstoffen erfolgt vorzugsweise in solchen Mengen, daß sich zusammen mit dem Wasserstoff- bzw. Chlorgehalt des Brenngutes in der Mischung ein Gesamtatomverhältnis von Wasserstoff zu Chlor von 1,0 : 1 bis 2,0 : 1, besonders bevorzugt von 1,2 : 1 bis 1,5 : 1 ergibt.

Als Chlorkohlenwasserstoffzumischungen kommen vorallem Verbindungen in Frage, die bei der Herstellung von wertvollen Zielprodukten zwangsweise anfallen, wie zum Beispiel Hochsieder aus der Vinylchloridproduktion oder 1,2-Dichlorpropan aus der Propylenoxidherstellung und Verbindungen deren sinnvolle Entsorgung per se äußerst problematisch ist bzw. für die es aufgrund des FCKW-Verbots keine weitere Verwendung mehr gibt, wie zum Beispiel Tetrachlorkohlenstoff aus der Methanchlorierung bzw. aus der über den Zwischenschritt Methanolveresterung ablaufenden Methylchloridchlorierung oder aus einer C₃-Kohlenwasserstoffperchlorierung. Vorzugsweise werden hochchlorierte Chlorkohlenwasserstoffe der allgemeinen Formel CₓH_{y}Cl_{z} mit x = 1 bis 4, y = 0 bis 3 und z = 3 bis 10 beigemischt.

Die in der Flamme entstehenden Verbrennungsgase werden durch indirekte Kühlung auf 500 bis 1000°C, vorzugsweise auf 700 bis 900°C abgekühlt. In einer bevorzugten Ausführungsform erfolgt die indirekte Kühlung durch Wärmetausch mit der mit Heißwasser geeigneten Druckes beschickten doppelwandigen Brennkammer unter Rückgewinnung eines Großteils der freiwerdenden Verbrennungswärme als Mitteldruckdampf. Nach dem ersten Kühlschritt werden die Verbrennungsgase gegebenenfalls über geeignete Gasfilter, beispielsweise Keramikfilter, geleitet, um Feststoffteilchen, die im Alt-PVC als thermisch wie chemisch stabile Additive enthalten sind, aus dem Verbrennungsgas abzuscheiden.

Das so behandelte Verbrennungsgas wird nun in eine Quenchvorrichtung geleitet und dort durch Einspritzen von wäßriger Salzsäure, deren Chlorwasserstoffkonzentration der Sättigungskonzentration bei den anstehenden Drücken und Temperaturen entspricht, auf 50 bis 120°C, vorzugsweise 80 bis 100°C, abgekühlt. Die wäßrige Salzsäure wird dabei über einen Pufferbehälter (Gas/Flüssigkeitsabscheider) und einen Kreislaufkühler (Wasserkühler) im Kreis gefahren. Bei diesem Kühlschritt kondensiert der größte Teil des entstandenen Verbrennungswassers aus dem Verbrennungsgas aus. Die dabei durch Hydrolyse aus flüchtigen anorganischen Verbindungen gebildeten Feststoffteilchen, die durch chemische Umsetzung aus Zumischungen im Alt-PVC bei dem Verbrennungsprozeß entstanden sind, werden gegebenenfalls über ein im Quenchkreislaufstrom befindliches Filter abgetrennt.

Das Verbrennungsgas wird nun in einem weiteren direkten Kühlschritt auf Temperaturen von -5 bis +10°C, vorzugsweise 0 bis 2°C abgekühlt, wodurch restliches Wasser als Salzsäure aus dem Verbrennungsgasstrom auskondensiert. Das Verbrennungsgas wird dazu aus dem Pufferbehälter der ersten Kühlstufe in einen weiteren Waschkühlkreislauf, bestehend aus indirektem Wärmetauscher, welcher vorzugsweise Sole entsprechender Temperatur als Kühlmittel enthält, und Gas/Flüssigkeitsabscheider, eingeleitet. Das in dieser Kühlstufe als Salzsäure auskondensierende Restwasser des Verbrennungsgasstroms wird in den Pufferbehälter der vorgeschalteten Kühlstufe gepumpt, wo die Salzsäure zusammen mit dem dort in Form von Salzsäure auskondensierten Verbrennungswasser aus dem System ausgeschleust wird.

Das mit dem erfindungsgemäßen Verfahren erhaltene, nahezu wasserfreie (H₂O-Gehalt < 50 Volppm) Verbrennungsgas besteht neben wenig (≤ 2,0 Vol%) Chlor und überschüssigem Sauerstoff im wesentlichen aus CO₂ und HCl. Dieser Chlorwasserstoff-Gasstrom kann nun ohne weitere Aufbereitung bzw. ohne Inertgasabtrennung, nach Aerosolnebelabscheidung und Vorwärmung über den Taupunkt, in der chemischen Synthese wiederverwertet werden. Vorzugsweise wird der bei dem erfindungsgemäßen Verfahren anfallende Chlorwasserstoff per se oder zusammen mit Chlorwasserstoff aus einer 1,2-Dichlorethan-Pyrolyseanlage einer Ethylen-Oxichlorierung zugeführt.

Mit dem erfindungsgemäßen Verfahren zum thermischen Recycling von Alt-PVC werden nicht nur erhebliche Einsparungen bei der energieintensiven Chlorherstellung erzielt, vielmehr wird der überwiegende Teil des Energieinhalts des Polymermoleküls, der über elementares Chlor und Ethylen bzw. die Zwischenstufe Vinylchlorid eingetragen im PVC steckt, auf höchstmöglichem Niveau, das heißt bei einem technisch interessanten Temperaturniveau zurückgewonnen.

Ein weiterer Gegenstand der Erfindung ist eine Vorrichtung zur Durchführung des erfindungsgemäßen Verfahrens, welche mit einer Verbrennungseinheit mit Kühleinrichtung und zwei hintereinandergeschalteten Kühlkreisläufen mit Einrichtungen zur Gas/Flüssigkeitstrennung ausgerüstet ist, dadurch gekennzeichnet, daß
die Einrichtung zur Verbrennung aus einem Reaktor 3 besteht, der mit einem Kühlmantel 4, welcher zur Rückgewinnung der Verbrennungsenergie mit einer Dampftrommel 5 verbunden ist, umgeben ist, und mit einem Brenner 2 sowie einer Beschickungseinrichtung 1 zur Zuführung der im Reaktor 3 umzusetzenden Reaktanden ausgerüstet ist und über Leitung 9, und einem gegebenenfalls zwischengeschalteten Gasfilter 10, mit der Quenchvorrichtung 13 des ersten Kühlkreislaufes verbunden ist,
welcher, im Kreis geschaltet, mit einer Quenchvorrichtung 13, einem Gas/Flüssigkeits-Abscheider 15, einer Quenchkreislaufpumpe 17, einem Wasserkühler 21 und gegebenenfalls einem Kerzenfilter 18 ausgerüstet ist, wobei der Abscheider 15 über Leitung 23 mit dem Abscheider 24 des zweiten Kühlkreislaufes verbunden ist,
welcher, im Kreis geschaltet, mit einem Gas/Flüssigkeits-Abscheider 24, einer Pumpe 26 einem Wärmetauscher 27 ausgerüstet ist, wobei der Abscheider 24 zur Ausschleusung des gekühlten Gasgemisches mit einer Leitung 29 versehen ist.

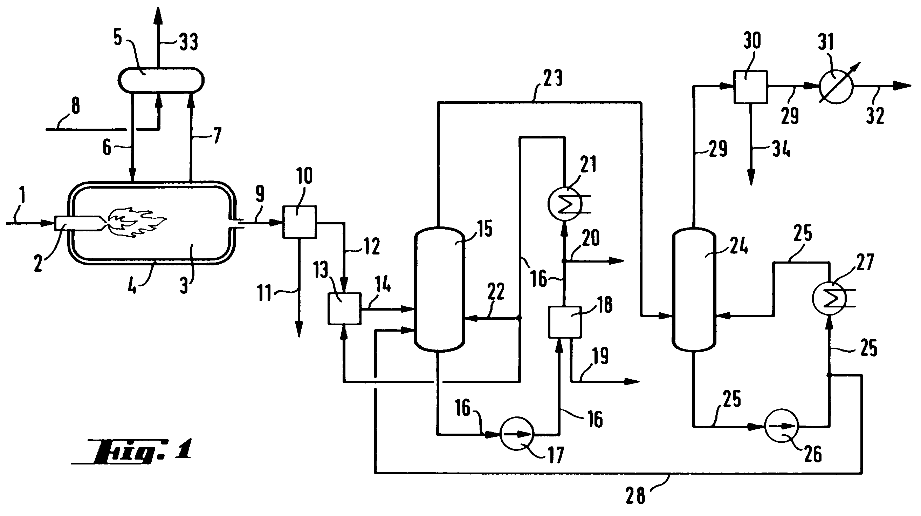

Figur 1 zeigt das Fließschema einer bevorzugten Ausführungsform der erfindungsgemäßen Vorrichtung.

Mit einer Beschickungseinrichtung 1 wird das Eduktgemisch, bestehend aus gemahlenem Alt-PVC, Chlorkohlenwasserstoff oder Wasser, Sauerstoff und/oder Chlorgas im beanspruchten Mengenverhältnis zueinander gemäß Figur 2 bis 4 in den Brenner 2 eingebracht. Nach thermischer oder elektrischer Zündung des Eduktgemisches am Brennermund erfolgt im Reaktor 3 bei 8 bar Überdruck die Umsetzung in der Flamme bei Temperaturen bis zu 2500°C und einer Verweilzeit von 40 Sekunden.

Die durch die exotherme Reaktion freigesetzte Reaktionswärme wird durch Verdampfen von heißem Wasser, das sich im Reaktorkühlmantel 4 befindet, abgeführt. Diese Verdampfungskühlung erfolgt über einen Thermosiphonkreislauf, wobei über Leitung 7 ein Wasserdampf/Heißwassergemisch in die Dampftrommel 5 aufsteigt. Dort erfolgt Phasentrennung. Der erzeugte 20 bar Wasserdampf wird druckgeregelt aus der Dampftrommel 5 über Leitung 33 ins Dampfnetz abgegeben, während das Heißwasser über Leitung 6 wieder in den Reaktorkühlmantel zurückfließt. Über Leitung 8 wird niveaugeregelt in Abhängigkeit vom Wasserstand der Dampftrommel 5 Kesselspeisewasser in den Mengen zugegeben wie Wasserdampf aus dem System entfernt wird.

Das gasförmige Reaktionsgemisch kühlt sich dabei ab und verläßt den Reaktor 3 über Leitung 9 mit einer Temperatur von 900-950°C. Im Gasfilter 10 werden anorganische Feststoffteilchen, die als Additives im Alt-PVC enthalten sind, aus dem Reaktionsgemisch abgeschieden und über Leitung 11 ausgeschleust.

Das filtrierte Gasgemisch gelangt über Leitung 12 zur Quenchvorrichtung 13, in der das Reaktionsgas durch Einspritzen von konzentrierter Salzsäure über Leitung 16 auf 80 bis 90°C abgeschreckt wird. Die konzentrierte Salzsäure entsteht durch Kondensation von Wasserdampf aus dem Reaktionsgemisch, wobei sich entsprechend Druck und Temperatur, durch Hineinlösen von Chlorwasserstoffgas aus dem Reaktionsgemisch in das auskondensierende Reaktionswasser, eine ca. 40 %ige Salzsäure bildet. Das Gemisch Quenchflüssigkeit/Reaktionsgas gelangt über Leitung 14 in den Abscheider 15. Hier erfolgt Phasentrennung. Die flüssige Phase wird in Leitung 16 mit der Quenchflüssigkeitskreislaufpumpe 17 über ein Kerzenfilter 18 und den Wasserkühler 21 zur Quenche 13 unter ständiger Kühlung im Kreis gepumpt. Zur Erhöhung der Flüssigumlaufmenge - dadurch erzielt man im Kühler 21 einen besseren Wärmeübergang - wird ein Teil der Flüssigumlaufmenge über Leitung 22 zum Abscheider 15 zurückgeführt. Im Kerzenfilter 18 erfolgt die Abtrennung von Feststoffen aus dem Quenchkreislauf, die durch Hydrolyse flüchtiger anorganischer Additive aus dem Alt-PVC entstanden sind und über Leitung 19 ausgeschleust werden.

Die Gasphase im Abscheider 15 - bestehend im wesentlichen aus Kohlendioxid, Chlorwasserstoff, überschüssigem Sauerstoff, etwa 0,8 Vol% Chlorgas und Restfeuchtigkeit - strömt über Leitung 23 zum Abscheider 24, der mit konzentrierter Salzsäure gefüllt ist, die über Leitung 25 mittels der Pumpe 26 unter Kühlung im Wärmetauscher 27 auf -8 bis 0°C - der Wärmetauscher 27 ist mit -10 grädiger Kühlsole beaufschlagt - über den Abscheider 24 im Kreis gefahren wird. Dabei kondensiert das Restwasser aus dem Reaktionsgemisch aus, das durch Hineinlösen von Chlorwasserstoffgas bei den herrschenden Druck- und Temperaturbedingungen eine ca. 42 %ige Salzsäure ergibt. Überschüssige 42 %ige Salzsäure wird standgeregelt in Abhängigkeit vom Niveau im Abscheider 24 über Leitung 28 in den Abscheider 15 gedrückt. Die Ausschleusung der gesamten ca. 40 %igen Salzsäure erfolgt niveaugeregelt in Abhängigkeit vom Stand im Abscheider 15 über Leitung 20.

Das Gasgemisch, das über Leitung 29 den Abscheider 24 verläßt, enthält neben Kohlendioxid überschüssigen Sauerstoff, ca. 0,8 Vol% Chlorgas und etwa 30 Volppm Wasser Chlorwasserstoff und wird nach Passieren eines Aerosolnebelabscheiders 30 - abgeschiedene Salzsäure-Aerosole werden über Leitung 34 ausgeschleust - und nach Vorwärmung auf 150°C im Wärmetauscher 31, der mit 15 bar Dampf betrieben wird, druckgeregelt bei etwa 7,5 bar Überdruck über Leitung 32 zur Oxichlorierung abgegeben.

In den Figuren 2 bis 4 sind bevorzugte Ausführungsformen zur Förderung des Alt-PVC bzw. Einbringung der Reaktanden in den Reaktor und der Beschickungseinrichtung 1 angegeben.
- Figur 2:: Eindüsen von Alt-PVC als Suspension in Chlorkohlenwasserstoffen oder Wasser (hydraulische Förderung).

Über Leitung 35 wird gemahlenes Alt-PVC aus einem Silobehälter o.ä. in den Rührwerksbehälter 36, der mit Rührmotor 37 und Rührer 38 ausgestattet und mit entsprechenden Mengen an Chlorkohlenwasserstoff oder Wasser über Leitung 39 vorgefüllt ist, unter Rühren eingebracht. Über Leitung 40 fließt die in Schwebe gehaltene Suspension auf die Saugseite der Pumpe 41, die die Suspension dann über Leitung 42 - über Leitung 42a kann die Suspension im Kreis gepumpt werden - in den Brenner 2 drückt. Über Leitung 43 wird Sauerstoff, über Leitung 44 gegebenenfalls Chlorgas in den beanspruchten Mengen in den Brenner 2 eingespeist. Das Eduktgemisch wird am Brennermund mit einer Lunte oder einer Zündkerze gezündet, worauf die erfindungsgemäße Umsetzung im Reaktor 3, der mit einem Kühlmantel 4 umgeben ist, vorsichgeht. Die Reaktionsprodukte verlassen den Reaktor 3 über Leitung 9.
- Figur 3:: Pneumatische Alt-PVC-Förderung

Gemahlenes Alt-PVC wird über Leitung 35 einer Dosierschnecke 45, die mit einem Motor 46 ausgestattet ist, zugegeben und von da über Leitung 47 in die Leitung 48 gefördert, in der Sauerstoff und gegebenenfalls das gesamte Chlorgas bzw. nur ein Teilstrom davon - über Leitung 49 angefördert - als Treibgas das Alt-PVC über Leitung 50 in den Brenner 2 drücken. Chlorgas kann auch über Leitung 51 zum Brenner 2 strömen.
Das Eduktgemisch wird thermisch oder elektrisch gezündet, worauf im Reaktor 3, der mit einem Kühlmantel 4 umgeben ist, die Umsetzung stattfindet. Das Reaktionsgemisch verläßt den Reaktor 3 über Leitung 9.
- Figur 4:: Beheizter Extruder zur Alt-PVC-Förderung

Gemahlenes Alt-PVC wird über Leitung 35 über einen Einfülltrichter dem Extruder 52 zugegeben. Der Extruder 52 ist mit einer elektrischen Heizspirale 53, einer Transportschnecke 54 und einem Spritzkopf 55 versehen. Im Extruder 52 wird das Alt-PVC erwärmt, homogenisiert plastifiziert und mittels der Transportschnecke 54 über den Spritzkopf 55 in den Brenner 2 eingedüst.
Über Leitung 56 wird Sauerstoff, über Leitung 57 Chlorgas und über Leitung 58 gegebenenfalls Chlorkohlenwasserstoff in den Brenner 2 eingebracht. Am Brennermund wird das Eduktgemisch elektrisch oder thermisch gezündet, worauf im Reaktor 3, der mit einem Kühlmantel 4 umgeben ist, die erfindungsgemäße Umsetzung stattfindet. Das Reaktionsgemisch verläßt den Reaktor 3 über Leitung 9.

Die nachfolgenden Beispiele dienen zur weiteren Erläuterung der Erfindung.

### Beispiel 1:

125 kg/h Abfall-PVC (sog. C-Ware) wurden zusammen mit 33,6 Nm³/h Chlorgas (H/Cl-Atomverhältnis = 1,2) und 100 Nm³/h Sauerstoff (5 % Überschuß) in einer doppelwandigen Brennkammer, die mit ca. 200 grädigem Wasser gekühlt war, bei 8 bar Überdruck und 35 sec. Verweilzeit verbrannt. Das Abfall-PVC hatte eine Korngröße von 1,5 mm. Die Eindüsung in den Brenner erfolgte pneumatisch mit Hilfe der beiden Gasströme. Die Zündung wurde mittels einer Zündkerze am Brennermund vorgenommen. Es entstand dabei eine stabile Flamme, die eine Temperatur von > 2200°C aufwies. Durch Verdampfen von Heißwasser im Doppelmantel der Brennkammer kühlte sich das Verbrennungsgas am Austritt der Brennkammer auf 850°C ab. Die Dampfproduktion betrug 700 kg/h bei 20 bar Überdruck, d.h. es wurden rund 70 % der Verbrennungsenthalpie, die -1,5.10⁴ k]/kg PVC-Umsatz beträgt, als Mitteldruckdampf zurückgewonnen. Mit anderen Worten ausgedrückt stellte sich somit eine spezifische Dampferzeugung von 5,6 Tonnen 20 bar Dampf pro Tonne verbranntem PVC ein.

Durch Einstellung des Deacon-Gleichgewichtes ergab sich im die Brennkammer verlassenden Verbrennungsgas folgende Zusammensetzung, wobei weder CO noch Rußbildung zu beobachten waren.
41,4 Vol-% CO₂
49,1 Vol-% HCl
6,5 Vol-% H₂O
1,4 Vol-% Cl₂
1,6 Vol-% O₂

Die Rauchgase wurden in der 1. Kühlstufe durch Einspritzen von 800 kg/h 39 %iger Salzsäure, die über einen Pufferbehälter und Wasserkühler im Kreis gefahren wurde, auf 90°C abgekühlt. Dabei kondensierten 15,1 kg/h 39 %ige Salzsäure aus. Das aus dem Pufferbehälter austretende Verbrennungsgas hatte danach folgende Zusammensetzung:
44,5 Vol-% CO₂
51,0 Vol-% HCl
1,4 Vol-% H₂O
1,4 Vol-% Cl₂
1,7 Vol-% O₂

Dieses Gas wurde in einer nachfolgenden Kühlstufe, bestehend aus Salzsäurekreislauf mit einem Wärmetauscher, der mit -10 grädiger Sole gekühlt wurde und einem Gas/Flüssigkeitsabscheider, auf +1°C abgekühlt, wobei weitere 3,8 kg/h ca. 42 %ige Salzsäure auskondensierten.

Diese Salzsäure wurde zum 1. Pufferbehälter gepumpt und dort standgeregelt mit der Salzsäure aus der 1. Kühlstufe aus dem System ausgeschleust. Der HCl-Verlust über die ausgetragene Salzsäure betrug 7,5 kg/h. Das den Gas/Flüssigkeitsabscheider verlassende Verbrennungsgas hatte folgende Zusammensezzung:
4 kmol/h CO₂ = 45,4 Vol-%
4,534 kmol/h HCl = 51,4 Vol-%
0,0002 kmol/h H₂O = 22 Volppm
0,13 kmol/h Cl₂ = 1,5 Vol-%
0,155 kmol/h O₂ = 1,7 Vol-%

Dieses Verbrennungsgas wurde nach Passieren eines Aerosolnebelabscheiders und nach Vorwärmung auf 150°C ohne Inertgasabtrennung einer Ethylenoxichlorierung zugeführt. Die Chlorrückgewinnungsrate betrug demnach 95,8 % bzw. 544 kg Cl₂/t PVC.

### Beispiel 2

Zum Einsatz kam ein Gemisch aus 100 kg/h Alt-PVC mit 2 mm Korngröße, das sich aus 90 % Hart-PVC, 8 % Weich-PVC und 2 % Vinylchlorid-Vinylacetat-Copolymeren mit 10 % Vinylacetat-Anteil zusammensetzte, und 60 kg/h CCl₄ als Chlorquelle, um ein H/Cl-Atomverhältnis von 1,5 einzustellen. Die Zusammensetzung des Alt-PVC-Gemisches war:
82,8 % PVC
4,0 % DOP (Dioctylphthalat-Weichmacher)
0,2 % Vinylacetat-Anteil
9,0 % CaCO₃ (Füllstoff)
4,0 % TiO₂ (Pigment)

Dieser Brenngutmix wurde analog Beispiel 1 bei einem Überdruck von 8 bar und einer Verweilzeit von 50 sec mit 93,2 Nm³/h O₂ (= 3 % Überschuß) bei einer Flammentemperatur von ca. 2300°C verbrannt, wobei der Brenngutmix als Suspension bzw. Slurry in die Brennkammer eingebracht wurde. Durch Verdampfen von Heißwasser im Doppelmantel der Brennkammer kühlte sich das Verbrennungsgas am Austritt der Brennkammer auf 700°C ab. Dabei wurden 653 kg/h 20 bar Dampf produziert bzw. 4 Tonnen Dampf pro Tonne Brenngutmix, was einer 75 %igen Energierückgewinnung, bezogen auf die Verbrennungsenthalpie von -2450 kcal/kg Brenngutmix entspricht. Durch Einstellung des Deacon-Gleichgewichtes bzw. durch thermische und chemische Umsetzung der Zusatzstoffe im Alt-PVC ergab sich folgende Rauchgaszusammensetzung:
33,28 Vol-% HCl
0,50 Vol-% Cl₂
12,97 Vol-% H₂O
6,74 Vol-% O₂
46,45 Vol-% CO₂
0,06 Vol-% TiCl₄
10 kg/h CaCl₂, das sich durch thermische Umsetzung von CaCO₃ mit Chlorwasserstoff gebildet hatte, und 3,6 kg/h nicht umgesetztes TiO₂ wurden über zwei wechselseitig betriebene Keramikgasfilter aus dem Verbrennungsgas abgetrennt. Die gefilterten Rauchgase wurden in der 1. Kühlstufe analog Beispiel 1 durch Einspritzen von 700 kg/h 39 %iger Salzsäure auf etwa 80°C abgekühlt. Dabei kondensierten 25,6 kg/h 39 %ige Salzsäure aus.

Zur Entfernung des durch Hydrolyse von TiCl₄ gebildeten TiO₂ x aqua (ca. 0,4 kg/h) wurde der Quenchkühlkreislauf über zwei wechselseitig betriebene korrosionsfeste Kerzenfilter geleitet. Das aus dem Pufferbehälter austretende Verbrennungsgas hatte folgende Zusammensetzung:
34,9 Vol-% HCl
0,6 Vol-% Cl₂
1,5 Vol-% H₂O
8,0 Vol-% O₂
55,2 Vol-% CO₂

Dieses Verbrennungsgas wurde analog Beispiel 1 auf +2°C weiter abgekühlt, wobei weitere 2,8 kg/h 42 %ige Salzsäure auskondensierten, die über den 1. Pufferbehälter zusammen mit der dort anfallenden Salzsäure standgeregelt aus dem System ausgeschleust wurden. Der HCl-Verlust über die ausgetragene Salzsäure betrug 11,4 kg/h.

Das aus dem Gas/Flüssigkeitsabscheider austretende Gas hatte folgende Zusammensetzung:
3,3994 kmol/h CO₂ = 56,2 Vol-%
0,49155 kmol/h O₂ = 8,1 Vol-%
0,0352 kmol/h Cl₂ = 0,6 Vol-%
2,1207 kmol/h HCl = 35,1 Vol-%
0,0002 kmol/h H₂O = 30 Volppm

Dieses Verbrennungsgas wurde ohne Inertgasabtrag nach Aerosolnebelabscheidung über ein Keramik-Kerzenfilter und Vorwärmer auf 150°C einer Ethylenoxichlorierung zugeführt. Die Chlorrückgewinnungsrate betrug demnach 87,6 % entsprechend 498 kg Cl₂ pro Tonne Abfall-PVC bzw. 487 kg Cl₂ pro Tonne Brenngutmix.

## Patentansprüche

1. Verfahren zum thermischen Recycling von Alt-PVC unter Wärmerückgewinnung und Rückgewinnung von wasserfreiem Chlorwasserstoff, dadurch gekennzeichnet, daß man
a) das Alt-PVC in Gegenwart von Sauerstoff verbrennt, wobei man dem Brenngut soviel gasförmiges Chlor und/oder Chlorkohlenwasserstoffe beimischt, daß zusammen mit dem Wasserstoff- bzw. Chlorgehalt des Brenngutes in der Mischung ein Gesamtatomverhältnis von Wasserstoff zu Chlor von mindestens 1 : 1 vorliegt,
b) das Verbrennungsgas unter Rückgewinnung eines Großteils der freiwerdenden Verbrennungswärme auf 500 bis 1000°C abkühlt und, gegebenenfalls nach Filterung,
c) durch Einspritzen von wäßriger Salzsäure, deren Chlorwasserstoffkonzentration der Sättigungskonzentration bei den anstehenden Drücken und Temperaturen entspricht, auf 50 bis 120°C abkühlt, wobei der größte Teil des entstandenen Verbrennungswassers auskondensiert wird und wobei durch Hydrolyse flüchtiger anorganischer Verbindungen gegebenenfalls auftretende Feststoffausfällungen aus der wäßrigen Salzsäure abfiltriert werden,
d) durch direkten Wärmetausch das Verbrennungsgas auf Temperaturen von -5 bis +10°C weiter abkühlt, wobei restliches Wasser als Salzsäure auskondensiert und
e) das weitgehend wasserfreie, chlorwasserstoffhaltige Verbrennungsgas der weiteren Verwendung zuführt.

2. Verfahren nach Anspruch 1, dadurch gekennzeichnet, daß man das Alt-PVC mit einer Sauerstoffquelle, die mehr als 90 Vol% molekularen Sauerstoff enthält, bei Überdrücken von 3 bis 15 bar zur Reaktion bringt.

3. Verfahren nach Anspruch 1 oder 2, dadurch gekennzeichnet, daß die Verbrennung bei einer Flammentemperatur von 2000 bis 2500°C und einer Verweilzeit des Gemisches in der Brennkammer von 30 bis 60 Sekunden erfolgt.

4. Verfahren nach Anspruch 1 bis 3, dadurch gekennzeichnet, daß man gasförmiges Chlor und/oder hochchlorierte Chlorkohlenwasserstoffe in solchen Mengen zumischt, daß sich zusammen mit dem Wasserstoff- bzw. Chlorgehalt des Brenngutes in der Mischung ein Gesamtatomverhältnis von Wasserstoff zu Chlor von 1,0 : 1 bis 2,0 : 1 ergibt.

5. Verfahren nach Anspruch 1 bis 4, dadurch gekennzeichnet, daß man als Chlorkohlenwasserstoffe hochchlorierte Chlorkohlenwasserstoffe der allgemeinen Formel CₓH_{y}Cl_{z} mit x = 1 bis 4, y = 0 bis 3 und z = 3 bis 10 beimischt.

6. Verfahren nach Anspruch 1 bis 5, dadurch gekennzeichnet, daß man einen so großen Sauerstoffüberschuß einstellt, daß das die Brennkammer verlassende Verbrennungsgas einen Chlorgehalt von 0,2 bis 2,0 Vol% aufweist.

7. Verfahren nach Anspruch 1 bis 6, dadurch gekennzeichnet, daß man die Abkühlung in Schritt b) durch indirekte Kühlung mittels Wärmetausch mit Heißwasser geeigneten Druckes, unter Rückgewinnung eines Großteils der freiwerdenden Verbrennungswärme als Mitteldruckdampf, durchführt.

8. Verfahren nach Anspruch 1 bis 7, dadurch gekennzeichnet, daß nach dem indirekten Kühlschritt in b) die Verbrennungsgase über Gasfilter bzw. nach der direkten Kühlung in c) die wäßrige Salzsäure über Kerzenfilter geleitet wird.

9. Verwendung des gemäß Anspruch 1 bis 8 aufbereiteten chlorwasserstoffhaltigen Verbrennungsgasstrom in der chemischen Synthese.

10. Vorrichtung zur Durchführung des Verfahrens gemäß Anspruch 1 bis 8, welche mit einer Verbrennungseinheit mit Kühleinrichtung und zwei hintereinandergeschalteten Kühlkreisläufen mit Einrichtungen zur Gas/Flüssigkeits-Trennung ausgerüstet ist, dadurch gekennzeichnet, daß die Einrichtung zur Verbrennung aus einem Reaktor 3 besteht, der mit einem Kühlmantel 4, welcher zur Rückgewinnung der Verbrennungsenergie mit einer Dampftrommel 5 verbunden ist, umgeben ist, und mit einem Brenner 2 sowie einer Beschickungseinrichtung 1 zur Zuführung der im Reaktor 3 umzusetzenden Reaktanden ausgerüstet ist und über Leitung 9, und einem gegebenenfalls zwischengeschalteten Gasfilter 10, mit der Quenchvorrichtung 13 des ersten Kühlkreislaufes verbunden ist,
welcher, im Kreis geschaltet, mit einer Quenchvorrichtung 13, einem Gas/Flüssigkeits-Abscheider 15, einer Quenchkreislaufpumpe 17, einem Wasserkühler 21 und gegebenenfalls einem Kerzenfilter 18 ausgerüstet ist, wobei der Abscheider 15 über Leitung 23 mit dem Abscheider 24 des zweiten Kühlkreislaufes verbunden ist,
welcher, im Kreis geschaltet, mit einem Gas/Flüssigkeits-Abscheider 24, einer Pumpe 26 einem Wärmetauscher 27 ausgerüstet ist, wobei der Abscheider 24 zur Ausschleusung des gekühlten Gasgemisches mit einer Leitung 29 versehen ist.

11. Vorrichtung nach Anspruch 10, dadurch gekennzeichnet, daß die Beschickungseinrichtung 1 mit einem Rührwerksbehälter 36, mit Rührmotor 37 und Rührer 38, einer Leitung 40 vom Rührwerksbehälter 36 zum Brenner 2, zur Beschickung mit der im Rührwerksbehälter bereiteten Alt-PVC-Suspension, sowie Zuleitungen 43 und 44 zur Beschickung mit Sauerstoff und Chlor ausgestattet ist.

12. Vorrichtung nach Anspruch 10, dadurch gekennzeichnet, daß die Beschickungseinrichtung 1 mit einer Dosierschnecke 45 mit Motor 46 und einer Zuleitung 50 von der Dosierschnecke 45 zum Brenner 2 ausgestattet ist, über die das mit der Dosierschnecke 45 geförderte Alt-PVC zusammen mit dem, gegebenenfalls über separate Leitungen zugeführten, Chlorgas und Sauerstoff dem Brenner 2 aufgegeben wird.

13. Vorrichtung nach Anspruch 10, dadurch gekennzeichnet, daß die Beschickungseinrichtung 1 mit einem beheizten Extruder 52 zur Förderung des Alt-PVC und mit separaten Leitungen 56, 57, 58 zur Zuführung von Sauerstoff, Chlorgas und Chlorkohlenwasserstoffen ausgestattet ist.

## Claims

1. Process for the thermal recycling of waste PVC with recovery of heat and anhydrous hydrogen chloride, characterized in that
a) the waste PVC is burnt in the presence of oxygen, sufficient gaseous chlorine and/or chlorinated hydrocarbons being added to the combustion material so that, together with the hydrogen content and chlorine content of the combustion material, a total atomic ratio of hydrogen to chlorine is present in the mixture of at least 1:1,
b) the combustion gas is cooled to 500 to 1000°C with recovery of a large part of the heat of combustion released and, if appropriate after filtration,
c) is cooled to 50 to 120°C by injection of aqueous hydrochloric acid whose hydrogen chloride concentration corresponds to the saturation concentration at the prevailing pressures and temperatures, the majority of the resulting water of combustion being condensed out and by hydrolysis of volatile inorganic compounds any solid precipitates occurring being filtered off from the aqueous hydrochloric acid,
d) the combustion gas is further cooled by direct heat exchange to temperatures of -5 to +10°C, residual water being condensed out as hydrochloric acid and
e) the substantially anhydrous hydrogen chloride-containing combustion gas is fed to further use.

2. Process according to Claim 1, characterized in that the waste PVC is reacted at gauge pressures of 3 to 15 bar with an oxygen source which contains more than 90% by volume of molecular oxygen.

3. Process according to Claim 1 or 2, characterized in that the combustion proceeds at a flame temperature of 2000 to 2500°C and a residence time of the mixture in the combustion chamber of 30 to 60 seconds.

4. Process according to Claim 1 to 3, characterized in that gaseous chlorine and/or highly chlorinated hydrocarbons are admixed in quantities such that together with the hydrogen content and chlorine content of the combustion material, a total atomic ratio of hydrogen to chlorine in the mixture of 1.0:1 to 2.0:1 results.

5. Process according to Claim 1 to 4, characterized in that the chlorinated hydrocarbons admixed are highly chlorinated hydrocarbons of the general formula CₓH_{y}Cl_{z} where x = 1 to 4, y = 0 to 3 and z = 3 to 10.

6. Process according to Claim 1 to 5, characterized in that an oxygen excess is set which is sufficiently high that the combustion gas leaving the combustion chamber has a chlorine content of 0.2 to 2.0% by volume.

7. Process according to Claim 1 to 6, characterized in that the cooling is carried out in step b) by indirect cooling by means of heat exchange with hot water of appropriate pressure, with recovery as medium-pressure steam of a large part of the heat of combustion released.

8. Process according to Claim 1 to 7, characterized in that, after the indirect cooling step in b), the combustion gases are passed through gas filters or, after the direct cooling in c), the aqueous hydrochloric acid is passed through candle filters.

9. Use in chemical synthesis of the hydrogen chloride-containing combustion gas stream treated according to Claim 1 to 8.

10. Apparatus for carrying out the process according to Claim 1 to 8 which is equipped with a combustion unit having a cooling device and two cooling circuits connected one after the other having devices for gas/liquid separation, characterized in that the device for combustion comprises a reactor 3 which is surrounded by a cooling jacket 4 which, for recovery of the combustion energy, is connected to a steam drum 5, and is equipped with a burner 2 and a charging device 1 for feeding the reactants to be reacted in the reactor 3 and is connected via line 9, and a gas filter 10 connected in between if appropriate, to the quench apparatus 13 of the first cooling circuit, which, connected in the circuit, is equipped with a quench apparatus 13, a gas/liquid separator 15, a quench circulation pump 17, a water cooler 21 and, if appropriate a candle filter 18, the separator 15 being connected via line 23 to the separator 24 of the second cooling circuit, which, connected in the circuit, is equipped with a gas/liquid separator 24, a pump 26, a heat exchanger 27, the separator 24 being provided with a line 29 for ejection of the cooled gas mixture.

11. Apparatus according to Claim 10, characterized in that the charging device 1 is equipped with a stirred vessel 36, with a stirrer motor 37 and stirrer 38, a line 40 from the stirred vessel 36 to the burner 2 for charging the waste PVC suspension prepared in the stirred vessel and feedlines 43 and 44 for charging oxygen and chlorine.

12. Apparatus according to Claim 10, characterized in that the charging device 1 is equipped with a feed screw 45 having a motor 46 and a feedline 50 from the feed screw 45 to the burner 2 via which the waste PVC transported by the feed screw 45 is conveyed to the burner 2 together with the chlorine gas and oxygen, if appropriate fed via separate lines.

13. Apparatus according to Claim 10, characterized in that the charging device 1 is equipped with a heated extruder 52 for transporting the waste PVC and with separate lines 56, 57, 58 for feeding oxygen, chlorine gas and chlorinated hydrocarbons.

## Revendications

1. Procédé de recyclage thermique du PVC usagé avec récupération de la chaleur et récupération du chlorure d'hydrogène anhydre, caractérisé en ce que l'on
a) brûle le PVC usagé en présence d'oxygène, où l'on mélange au produit de combustion suffisamment de chlore gazeux et/ou d'hydrocarbures chlorés pour que l'on atteigne un rapport atomique total de l'hydrogène au chlore d'au moins 1:1, en prenant en compte également tenant compte de la teneur en hydrogène et respectivement, en chlore du produit de combustion dans le mélange,
b) refroidit à 500 à 1000°C le gaz de combustion avec récupération d'une grande partie de la chaleur de combustion libérée et, éventuellement après filtration,
c) refroidit à 50 à 120°C, par injection d'acide chlorhydrique aqueux dont la concentration en chlorure d'hydrogène correspond à la concentration de saturation aux pressions et températures prévalentes, où la plus grande partie de l'eau de combustion formée est séparée par condensation et où les précipités solides éventuellement apparus lors de l'hydrolyse de composés inorganiques volatils sont séparés par filtration de l'acide chlorhydrique aqueux,
d) refroidit encore jusqu'à des températures de -5 à +10°C, par échange de chaleur direct, le gaz de combustion, où l'eau résiduelle est condensée pour donner de l'acide chlorhydrique et
e) envoie le gaz de combustion contenant du chlorure d'hydrogène et largement exempt d'eau vers une utilisation ultérieure.

2. Procédé suivant la revendication 1, caractérisé en ce que l'on fait réagir le PVC usagé avec une source d'oxygène qui contient plus de 90% en volume d'oxygène moléculaire, à une surpression de 3 à 15 bars.

3. Procédé suivant la revendication 1 ou 2, caractérisé en ce que la combustion se fait à une température de flamme de 2000 à 2500°C et pour une durée de séjour du mélange dans la chambre de combustion de 30 à 60 secondes.

4. Procédé suivant les revendications 1 à 3, caractérisé en ce que l'on mélange du chlore gazeux et/ou des hydrocarbures fortement chlorés en des quantités telles que l'on atteigne un rapport atomique total de l'hydrogène au chlore de 1,0:1 à 2,0:1, en considérant également la teneur en hydrogène et respectivement, en chlore du produit de combustion dans le mélange.

5. Procédé suivant les revendications 1 à 4, caractérisé en ce que l'on mélange comme hydrocarbures chlorés, des hydrocarbures fortement chlorés de formule générale CₓH_{y}Cl_{z} avec x = 1 à 4, y = 0 à 3 et z = 3 à 10.

6. Procédé suivant les revendications 1 à 5, caractérisé en ce que l'on établit un excès d'oxygène suffisamment grand pour que le gaz de combustion quittant la chambre de combustion présente une teneur en chlore de 0,2 à 2,0% en volume.

7. Procédé suivant les revendications 1 à 6, caractérisé en ce que l'on réalise le refroidissement de l'étape b) par refroidissement indirect au moyen d'un échange de chaleur avec de l'eau chaude, à pression appropriée et avec récupération d'une grande partie de la chaleur de combustion libérée sous forme de vapeur à pression moyenne.

8. Procédé suivant les revendications 1 à 7, caractérisé en ce que, après l'étape b) de refroidissement indirect, les gaz de combustion sont conduits à travers des filtres gazeux et respectivement, après le refroidissement direct en c), l'acide chlorhydrique aqueux est conduit à travers des filtres bougie.

9. Utilisation du courant de gaz de combustion contenant du chlorure d'hydrogène, préparé suivant les revendications 1 à 8, en synthèse chimique.

10. Dispositif pour réaliser le procédé suivant les revendications 1 à 8, qui est équipé d'une unité de combustion avec un montage de refroidissement et deux circuits de recyclage réfrigérants montés en série avec des montages pour la séparation gaz/liquide, caractérisé en ce que le montage de combustion consiste en un réacteur 3 qui est entouré d'un manteau de refroidissement 4 lequel est relié, pour la récupération de l'énergie de combustion, à un tambour à vapeur 5, et est équipé d'un brûleur 2 ainsi que d'un montage de remplissage 1 pour l'introduction des réactifs traités dans le réacteur 3 et est relié par la conduite 9, et un filtre à gaz 10 éventuellement intercalé, au dispositif de traitement 13 du premier circuit de recyclage réfrigérant, lequel est équipé, par un montage en circuit, d'un dispositif de traitement 13, d'un séparateur gaz/liquide 15, d'une pompe de circuit de recyclage de traitement 17, d'un réfrigérant à eau 21 et éventuellement, d'un filtre bougie 18, où le séparateur 15 est relié par la conduite 23 au séparateur 24 du deuxième circuit de recyclage réfrigérant, lequel est équipé, par un montage en circuit, d'un séparateur gaz/liquide 24, d'une pompe 26 et d'un échangeur de chaleur 27, où le séparateur 24 est muni d'une conduite 29 pour l'évacuation du mélange gazeux refroidi.

11. Dispositif suivant la revendication 10, caractérisé en ce que le montage de remplissage 1 est doté d'un récipient à agitation mécanique 36, avec un moteur d'agitation 37 et un agitateur 38, d'une conduite 40 allant du récipient à agitation mécanique 36 au brûleur 2, pour le remplissage par la suspension de PVC usagé préparée dans le récipient à agitation mécanique, ainsi que des conduites 43 et 44 pour le remplissage par de l'oxygène et du chlore.

12. Dispositif suivant la revendication 10, caractérisé en ce que le montage de remplissage 1 est doté d'une vis doseuse 45 avec un moteur 46 et une conduite 50 allant de la vis doseuse 45 au brûleur 2, par laquelle le PVC usagé alimenté par la vis doseuse 45 est chargé avec le chlore gazeux et l'oxygène, éventuellement amenés par des conduites séparées, dans le brûleur 2.

13. Dispositif suivant la revendication 10, caractérisé en ce que le montage de remplissage 1 est doté d'une extrudeuse chauffée 52 pour l'alimentation du PVC usagé et de conduites séparées 56, 57, 58 pour introduire l'oxygène, le chlore gazeux et les hydrocarbures chlorés.
